# EUROPÄISCHE PATENTSCHRIFT

(11) **EP 0 425 896 B1**
(45) Veröffentlichungstag und Bekanntmachung des Hinweises auf die Patenterteilung: **18.05.1994**
(21) Anmeldenummer: 90119916.6
(22) Anmeldetag: 17.10.1990
(51) Int. Cl.: B60J 3/02

(54) **Sonnenblende mit Spiegel und einer klappbaren Abdeckung**
Sun visor with mirror and pivoting cover
Paresoleil avec miroir et volet pivotant

(30) Priorität: 02.11.1989 DE 3936350
(43) Veröffentlichungstag der Anmeldung: 08.05.1991
(73) Patentinhaber: Gebr. Happich GmbH, D-42097 Wuppertal (DE)
(72) Erfinder: Renahy, Xavier, FR-Conflans/Lanterne (FR)

(56) Entgegenhaltungen:
- EP-A- 0 261 906
- US-A- 4 213 169

## Beschreibung

Die Erfindung betrifft eine Sonnenblende mit Spiegel und eine Abdeckung über dem Spiegel, die an der Sonnenblende mittels mindestens eines Scharniers klappbar befestigt ist und durch Halteelemente sowohl in der vom Spiegel weggeklappten als auch in der auf den Spiegel aufgeklappten Stellung gehalten wird, wobei die Haltelemente aus wenigstens einem an der Sonnenblende oder der Abdeckung angeordneten, Zwei Rastflächen aufweisenden Nocken bestehen, die mit wenigstens einem an der Abdeckung oder an der Sonnenblende angeordneten Widerlager zusammenwirken.

In EP-A-0 117 951 ist eine Sonnenblende beschrieben, die eine Kunststoffabdeckung mit zwei daran materialeinheitlich angeformten, halboffenen Scharnieraugen aufweist, in die mit einem Kunststoffrahmen materialeinheitlich geformte Scharnierzapfen einklipsbar sind. Die von dem Scharnier beabstandeten Halteelemente bestehen aus wenigstens einer Zugfeder, die einerseits an einem Vorsprung des Spiegelrahmens und andererseits an einem entsprechenden Vorsprung der Abdeckung befestigt ist. Der Vorsprung an der Abdeckung bewegt sich auf einer von der Klappachse der Abdeckung entfernten Kreisbahn so, daß der Anlenkpunkt der Zugfeder in der auf den Spiegel geklappten Stellung der Abdeckung auf der einen Seite der Klappachse und in der vom Spiegel weggeklappten Stellung der Abdeckung auf der anderen Seite der Klappachse der Abdeckung liegt, wodurch eine Übertotpunktwirkung erzielt wird, die die Abdeckung in der auf den Spiegel geklappten Stellung und in der vom Spiegel weggeklappten Stellung festhält.

Diese Anordnung ist kompliziert und erfordert einen erhöhten Montageaufwand, da die Zugfeder nach dem Zusammenklipsen des Scharniers in die dafür vorgesehenen Befestigungsvorsprünge eingehängt werden muß. Des weiteren ist mit der bekannten Anordnung ein erhöhter Platzbedarf verbunden.

Mit der Sonnenblende gemäß EP-A-0 261 906 und EP-A-0 261 989 wurde versucht, diese Nachteile zu vermeiden. Auch bei dieser Sonnenblende läßt sich eine Abdeckung mit einem Spiegelrahmen durch Zusammenklipsen eines Scharniers verbinden. Um die Abdeckung in der vom Spiegel weggeklappten Stellung bzw. auf den Spiegel geklappten Stellung zu halten, ist am Scharnierauge ein nockenartiger Vorsprung angeformt, der mit einer hinter diesen Nocken im Spiegelrahmen angeordneten Blattfeder zusammenwirkt. Wenngleich der Platzbedarf dieser Anordnung gegenüber der Anordnung gemäß EP-A-0 117 951 verringert ist, erfordert auch diese Anordnung einen erhöhten Montageaufwand für die Blattfeder, die als getrenntes Teil vormontiert werden muß.

In US-C-4 213 169 ist des weiteren eine Sonnenblende mit einem Spiegel und einer Abdeckung über dem Spiegel beschrieben, bei der die Abdeckung ebenfalls zwei beabstandete Scharnierzapfen, die in entsprechende Scharnieraugen am Spiegelrahmen einklipsbar sind, aufweist. Um bei dieser Anordnung zu erreichen, daß die Abdeckung in der vom Spiegel weggeklappten Stellung und in der auf den Spiegel geklappten Stellung gehalten wird, weisen die Scharnieraugen einen unrunden Querschnitt mit einer Rastfläche und die Scharnierzapfen einen nockenartigen Querschnitt mit zwei Anflächungen auf, so daß beim Aufklappen der Abdeckung die Spitze des Nockens am Scharnierzapfen über die Anflächung im Scharnierauge geführt wird und es dabei aufweitet. Sowohl in der vom Spiegel weggeklappten Stellung als auch in der auf den Spiegel geklappten Stellung wirken die Anflächung im Scharnierauge und die Anflächung des Nocken so zusammen, daß die gewünschte Haltewirkung erreicht wird.

Bei dieser Anordnung ist nachteilig, daß das Scharnier bei der Betätigung hoch beansprucht wird, was zu schnellen Abnutzungserscheinungen und Geräuschen führt. Es ergeben sich auch Schwierigkeiten, die erforderlichen Haltekräfte im Scharnier zu erzielen, da die Abmessungen des Scharniers im Vergleich zur Abdeckung klein sein müssen, um zu vermeiden, daß die Sonnenblende zu dick wird.

Der Erfindung liegt die Aufgabe zugrunde, eine Sonnenblende der eingangs erwähnten Art zu verbessern, indem die Herstellung und Montage vereinfacht werden, ohne daß die gewünschte Funktion beeinträchtigt wird.

Ausgehend von dieser Aufgabenstellung wird bei einer Sonnenblende der eingangs erwähnten Art erfindungsgemäß vorgeschlagen, daß der Spiegel von einem spritzgegossenen Kunststoffrahmen gehalten ist, der mittels Rastungen in eine Vertiefung der Sonnenblende einklipsbar ist, daß wenigstens ein Widerlager in Form eines Vorsprungs und zwei dazu beabstandete Scharnierzapfen materialeinheitlich an einer Längsvorderseite des Kunststoffrahmens und entsprechend beabstandete Scharnieraugen und ein Nocken an der Rückseite der aus Kunststoff spritzgegossenen Abdeckung materialeinheitlich angeformt sind.

Bei dieser Anordnung sind die Funktionen des Scharniers und der Halteelemente voneinander getrennt, ohne daß es erforderlich ist, diese Halteelemente getrennt zu montieren, um zwischen der Abdeckung und der Sonnenblende eine Wirkverbindung herzustellen. Dadurch lassen sich die Scharniere in einfachster Weise ausbilden, und auch die Halteelemente lassen sich so dimensionieren, daß die Abdeckung sowohl in der vom Spiegel weggeklappten Stellung als auch in der auf den Spiegel geklappten Stellung sicher gehalten wird, dennoch keine Überbeanspruchung dieser Halteelemente und/oder der Scharniere auftreten.

Der Spiegelrahmen mit dem Scharnierzapfen, dem Vorsprung und den erforderlichen Rastungen zum Einklipsen in die Vertiefung der Sonnenblende kommt fertig aus der Spritzgußform, ohne daß irgendeine Nacharbeit oder Montagetätigkeit erforderlich ist. Dasselbe gilt für die spritzgegossene Abdeckung mit den materialeinheitlich an der Rückseite angeformten Scharnieraugen und Nocken. Es bedeutet hierbei kein Problem, die Scharnieraugen in der Spritzgußform halboffen zum Einklipsen der Scharnierzapfen zu gestalten.

Zur erleichterten Montage und sicheren Funktion trägt des weiteren bei, daß die Scharnierzapfen Teile eines Zwei von der Längsvorderseite des Kunststoffrahmens abstehende Schenkel aufweisenden U-förmigen Bügels sind.

Die Erfindung wird nachstehend anhand einer in der Zeichnung dargestellten Ausführungsform des näheren erläutert. Es zeigen:

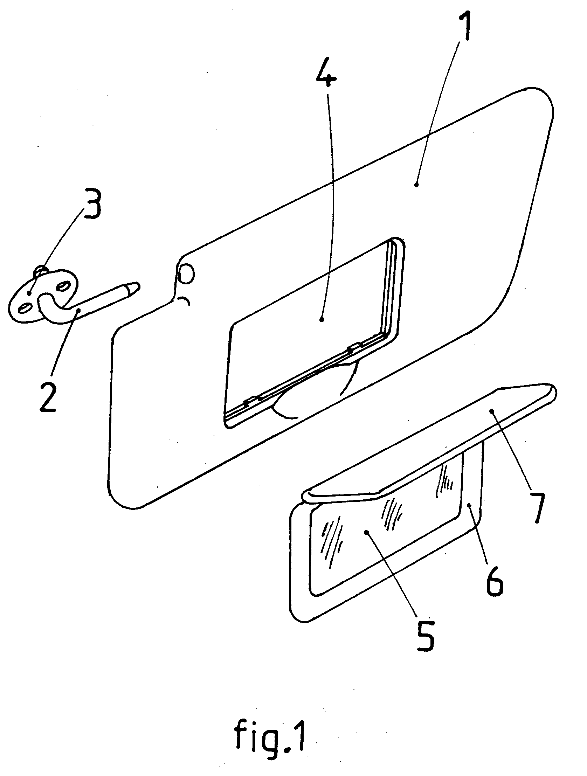

- Fig. 1: eine auseinandergezogene Darstellung einer Sonnenblende mit Achse und Spiegel,

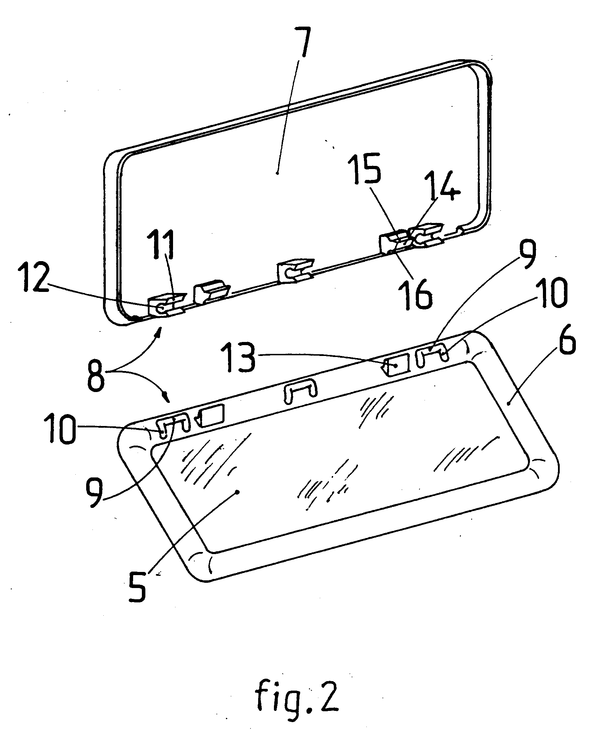

- Fig. 2: eine auseinandergezogene Darstellung eines in einem Spiegelrahmen gehaltenen Spiegels mit Abdeckung.

Ein im allgemeinen gepolsterter Sonnenblendenkörper 1 weist eine Achse 2 mit einem Böckchen 3 auf, mittels derer der Sonnenblendenkörper 1 an der Karosserie eines Kraftfahrzeuges in der Nähe der Windschutzscheibe befestigt ist. Die Lagerung der Achse 2 im Sonnenblendenkörper 1 und im Böckchen 3 gestattet es, den Sonnenblendenkörper 1 sowohl nach unten gegen die Windschutzscheibe als auch seitlich gegen ein Seitenfenster zu klappen. Eine Vertiefung 4 im Sonnenblendenkörper 1 dient zur Aufnahme eines in einem Spiegelrahmen 6 gehaltenen Spiegels 5 mit einer Abdeckung 7. Diese Spiegeleinheit kann z.B. in die Vertiefung 4 mittels nicht dargestellter Rastungen eingeklipst werden.

Die Abdeckung 7 ist am Spiegelrahmen 6 mittels eines Scharniers 8 schwenkbeweglich befestigt. Das Scharnier besteht aus an einer Längsvorderseite des Spiegelrahmens 6 materialeinheitlich angeformte Schenkel 1o und einen diese Schenkel 1o verbindenden Scharnierzapfen 9, so daß ein von der Längsvorderseite des Spiegelrahmens 6 vorstehender U-förmiger Bügel gebildet ist. Zwei solcher Bügel 9,1o sind an der Längsvorderseite des Spiegelrahmens 6 in der Nähe der Seitenränder angeordnet. Die Abdeckung 7 weist entsprechende Scharnieraugen 11 auf, die halb geöffnet sind, so daß eine Öffnung 12 vorhanden ist, durch die sich die Scharnierzapfen 9 in die Scharnieraugen 11 einklipsen lassen.

Von den Scharnieren 8 beabstandet, sind auf dem Spiegelrahmen 6 Vorsprünge 13 und an der Abdeckung mit diesen Vorsprüngen 13 zusammenwirkende Rastnocken 14 angeordnet. Die Rastnocken weisen Rastflächen 15, 16 auf, die so gestaltet sind, daß sie die Abdeckung 7 in der vom Spiegel weggeklappten Stellung und in der auf den Spiegel geklappten Stellung halten.

Sowohl der Spiegelrahmen 6 mit den U-förmigen Bügeln 9, 1o und den Vorsprüngen 13 als auch die Abdeckung 7 mit den Scharnieraugen 11 und den Rastnocken 14 sind als Kunststoffspritzgußteile geformt, so daß sich die Einzelelemente des Scharniers 8 sowie die Vorsprünge 13 und die Rastnocken 14 materialeinheitlich mit dem Spiegelrahmen 6 bzw. der Abdeckung 7 ergeben.

Die Abmessungen des Spiegelrahmens, der U-förmigen Bügel 9, 1o, der Vorsprünge 13 sowie der Abdeckung 7 mit den Scharnieraugen 11 und den Rastnocken 14 sind so gewählt, daß sich das Scharnier 8 durch Einklipsen der Scharnierzapfen 9 in die Scharnieraugen 11 durch die Öffnungen 12 hindurch leicht montieren läßt und andererseits die von den Vorsprüngen 13 auf die Rastflächen 15, 16 der Rastnocken 14 ausgeübten Kräfte ausreichen, um die Abdeckung 7 sicher in der vom Spiegel 5 weggeklappten und auf den Spiegel 5 geklappten Stellung zu halten.

## Patentansprüche

1. Sonnenblende mit Spiegel und einer Abdeckung über dem Spiegel, die an der Sonnenblende mittels mindestens eines Scharniers klappbar befestigt ist und Halteelemente sowohl in der vom Spiegel weggeklappten als auch in der auf den Spiegel aufgeklappten Stellung gehalten wird, wobei die Halteelemente aus wenigstens einem an der Sonnenblende (1) oder der Abdeckung (7) angeordneten, zwei Rastflächen (15, 16) aufweisenden Nocken (14) bestehen, die mit wenigstens einem an der Abdeckung (7) oder an der Sonnenblende (1) angeordneten Widerlager (13) zusammenwirken, dadurch gekennzeichnet, daß der Spiegel (5) von einem spritzgegossenen Kunststoffrahmen (6) gehalten ist, der mittels Rastungen in eine Vertiefung (4) der Sonnenblende (1) einklipsbar ist, daß wenigstens ein Widerlager in Form eines Vorsprungs (13) und zwei dazu beabstandete Scharnierzapfen (9) materialeinheitlich an einer Längsvorderseite des Kunststoffrahmens (6) und entsprechend beabstandete Scharnieraugen (11) und ein Nocken (14) an der Rückseite der aus Kunststoff spritzgegossenen Abdeckung (7) materialeinheitlich angeformt sind.

2. Sonnenblende nach Anspruch 1, dadurch gekennzeichnet, daß die Scharnieraugen (11) halboffen zum Einklipsen der Scharnierzapfen (9) gestaltet sind.

3. Sonnenblende nach Anspruch 1 oder 2, dadurch gekennzeichnet, daß der Scharnierzapfen (9) Teil eines zwei von der Längsvorderseite des Kunststoffrahmens (6) abstehende Schenkel (10) aufweisen den U-förmigen Bügels ist.

## Claims

1. Sun visor having a mirror and a cover over the mirror, which cover is fastened foldably to the sun visor by means of at least one hinge and is held by holding elements both in the position folded away from the mirror and in the position folded out onto the mirror, the holding elements comprising at least one cam (14) disposed on the sun visor (1) or cover (7) and exhibiting two catch faces (15, 16), which cams interact with at least one counter-bearing (13) disposed on the cover (7) or on the sun visor (1), characterized in that the mirror (5) is held by an injection-moulded plastics frame (6), which can be clipped by means of catches into a recess (4) in the sun visor (1), in that at least one counter-bearing in the form of a projection (13) and two pivot pins (9) distanced therefrom are formed in material uniformity onto a longitudinal front side of the plastics frame (6) and correspondingly distanced hinge eyes (11) and a cam (14) are formed in material uniformity onto the back of the cover (7), which cover is injection-moulded from plastic.

2. Sun visor according to Claim 1, characterized in that the hinge eyes (11) are shaped half-open to allow the pivot pins (9) to be clipped in.

3. Sun visor according to Claim 1 or 2, characterized in that the pivot pin (9) is part of a U-shaped bow exhibiting two legs (10) protruding from the longitudinal front side of the plastics frame (6).

## Revendications

1. Pare-soleil avec miroir et couvercle sur le miroir, qui est fixé de manière à pouvoir être rabattu sur le pare-soleil au moyen d'au moins une charnière et qui est maintenu par des éléments de maintien, tant en position éloignée du miroir qu'en position rabattue sur le miroir, les éléments de maintien étant constitués d'au moins une came (14) placée sur le pare-soleil (1) ou sur le couvercle (7), présentant deux surfaces d'encliquetage (15, 16), qui coopèrent avec au moins une contre-butée (13), prévue sur le couvercle (7) ou sur le pare-soleil (1), caractérisé en ce que le miroir (5) est maintenu par un cadre en matière plastique (6) moulé par injection, qui peut être clipsé au moyen de dispositifs d'arrêt dans un creux (4) du pare-soleil (1), en ce qu'au moins une butée en forme de saillie (13) et deux axes de charnière (9), espacés de celle-ci, sont venus de moulage, dans la même matière, sur un côté avant longitudinal du cadre en matière plastique (6) et des oeillets de charnière (11), espacés en conséquence, ainsi qu'une came (14) sont venus de moulage, dans la même matière, sur la face arrière du couvercle (7) en matière plastique moulé par injection.

2. Pare-soleil selon la revendication 1, caractérisé en ce que les oeillets de charnière (11) sont semi-ouverts pour le clipsage des axes de charnière (9).

3. Pare-soleil selon les revendications 1 ou 2, caractérisé en ce que l'axe de charnière (9) fait partie d'un étrier en U présentant deux branches (10), dépassant du côté avant longitudinal du cadre en matière plastique (6).
